(19) Europäisches Patentamt

European Patent Office

Office européen des brevets

(11) Veröffentlichungsnummer: **0 428 955 A2**

# (12) EUROPÄISCHE PATENTANMELDUNG

(21) Anmeldenummer: 90121526.9

(22) Anmeldetag: 10.11.90

(51) Int. Cl.5: **G02B 23/08**

(30) Priorität: 21.11.89 DE 3938587

(43) Veröffentlichungstag der Anmeldung:
29.05.91 Patentblatt 91/22

(84) Benannte Vertragsstaaten:
**DE FR GB IT**

(71) Anmelder: **Wegmann & Co. GmbH**
**August-Bode-Strasse 1**
**W-3500 Kassel(DE)**

(72) Erfinder: **Geule, Gerd**
**Unter der Eichhecke 9**
**W-3501 Fuldatal(DE)**

(74) Vertreter: **Feder, Wolf-Dietrich et al**
**Dr. Wolf-D. Feder, Dr. Heinz Feder Dipl.-Ing.**
**P.-C. Sroka Dominikanerstrasse 37**
**W-4000 Düsseldorf 11(DE)**

(54) **Vorrichtung zur Rundumüberwachung von Objekten, insbesondere Kampffahrzeugen.**

(57) Eine Vorrichtung zur Rundumüberwachung von Objekten, insbesondere Kampffahrzeugen, die ein ihre Oberseite überragendes Rundblickgerät (2) aufweisen, mittels rotierender Sensoren (4). Um eine Abschattung des Sichtfeldes des Sensors (4) durch das Rundblickgerät (2) zu vermeiden, ist der Sensor auf einem Trägerring (3) angeordnet und das Rundblickgerät (2) koaxial durch den Trägerring so hin-durchgeführt, daß sein Ausblickteil (2.1) oberhalb des Sensors (4) liegt. Die vom Sensor (4) ausgehenden elektrischen Signale können über ein in den Trägerring (3) integriertes Wälzlager mit elektrischer Energieübertragung in das Innere des Objekts übertragen werden.

FIG.1

Die Erfindung betrifft eine Vorrichtung zur Rundumüberwachung von Objekten, insbesondere Kampffahrzeugen, die ein ihre Oberseite überragendes Rundblickgerät aufweisen, mittels rotierender Sensoren.

Üblicherweise sind Gefechtsfahrzeuge, wie z.B. Kampf-oder Schützenpanzer, zur Rundumbeobachtung mit einem um 360° verdrehbaren Rundblickgerät sowie zusätzlich mit fest installierten glasoptischen Winkelspiegeln ausgerüstet. Die Winkelspiegel sind in der Regel kreisförmig um die Einstiegsluke des Fahrzeugs angeordnet. Diese Anordnung hat den Nachteil, daß wegen des Rundblickgerätes sich für die Winkelspiegel eine Abschattung der Rundumsicht ergibt und die Winkelspiegel selbst in unmittelbarer Nähe eines der Besatzungsmitglieder installiert werden müssen.

Es ist weiterhin bekannt, Objekte mittels rotierender Sensoren zu überwachen. Dies stößt aber dann auf Schwierigkeiten, wenn an der Oberseite des zu überwachenden Objekts ein unabhängig richtbares Rundblickgerät angeordnet ist, durch das eine Abschattung des Sensors bewirkt wird.

Der Erfindung liegt die Aufgabe zugrunde, eine Vorrichtung der eingangs erwähnten Art so auszubilden, daß bei einer Überwachung mittels rotierender Sensoren keine Abschattung durch ein anderes, die Oberseite überragendes Rundblickgerät auftreten kann.

Die Lösung dieser Aufgabe erfolgt erfindungsgemäß mit den Merkmalen aus dem kennzeichnenden Teil des Patentanspruchs 1. Vorteilhafte Weiterbildungen der erfindungsgemäßen Vorrichtung sind in den Unteransprüchen beschrieben.

Der Grundgedanke der Erfindung besteht darin, einen Sensorträger an der Oberseite des zu schützenden Objekts anzuordnen, dessen Bewegungsbahn so um das Rundblickgerät herumgeführt ist, daß eine Rundumüberwachung durch den Sensor oder die Sensoren möglich ist, ohne daß eine Abschattung auftritt und ohne daß das Sichtfeld des Rundumblickgerätes beeinträchtigt ist.

Bei einer besonders vorteilhaften Ausführungsform der erfindungsgemäßen Vorrichtung ist das ebenfalls eine uneingeschränkte Rundumwirkungsmöglichkeit aufweisende Rundblickgerät konzentrisch zu dem als drehbarer Trägerring ausgebildeten Sensorträger angeordnet und zwar so, daß der Ausblickteil des Rundblickgerätes oberhalb des Sensors liegt. Dadurch wird verhindert, daß sich Sensor und Rundblickgerät in ihrem Sichtfeld gegenseitig beeinträchtigen. In besonders vorteilhafter Weise kann dabei der Sensorträger mit der Dachplatte eines Kampffahrzeugs über ein mittenfreies Drehlager mit elektrischer Energieübertragung verbunden sein, wie es beispielsweise in der DE-OS 30 20 757 beschrieben ist. Die vom Sensor ausgehenden elektrischen Signale können dann direkt einer im Inneren des Kampffahrzeugs angeordneten Signalverarbeitungsvorrichtung und/oder Signalanzeigevorrichtung zugeführt werden.

Es ist allerdings auch möglich, den Sensorträger auf einer beliebig gekrümmten Bahn um das Rundblickgerät herumzuführen, wobei die vom Sensor ausgehenden elektrischen Signale über Schleifkontakte und eine Kontaktschiene oder drahtlos der im Inneren des Objekts angeordneten Signalverarbeitungsvorrichtung und/oder Signalanzeigevorrichtung zugeführt werden.

Insbesondere in der Anwendung bei Kampffahrzeugen bietet die erfindungsgemäße Vorrichtung eine ausblendungsfreie Rundumüberwachung für zwei unabhängig richtbare Geräte.

So kann z.B. bei einem Militärfahrzeug eine drehbare Kameraanordnung abgesetzt von der Besatzung und in optimaler Beobachtungsposition, beispielsweise auf elevierbarer Plattform, installiert sein. Diese Kameraanordnung kann Fernsehbilder an die im Inneren des Fahrzeugs installierten Bildschirme liefern, was beispielsweise für den Fahrer bei Rückwärtsfahrt von besonderem Vorteil sein kann. Bei einer solchen Anordnung muß nur die Kameraanordnung selbst dem Feuer direkt gerichteter Waffen ausgesetzt werden. Das gepanzerte Gehäuse für die Besatzung muß nicht mit Durchbrüchen für Winkelspiegel versehen werden.

Im Folgenden wird anhand der beigefügten Zeichnungen ein Ausführungsbeispiel für eine Vorrichtung zur Rundumüberwachung nach der Erfindung näher erläutert.

In den Zeichnungen zeigen:

Fig. 1 in einer perspektivischen Ausschnittsdarstellung einen Teil einer Dachplatte eines Kampffahrzeugs mit einem Rundblickgerät und einer Vorrichtung zur Rundumüberwachung mittels rotierendem Sensor;

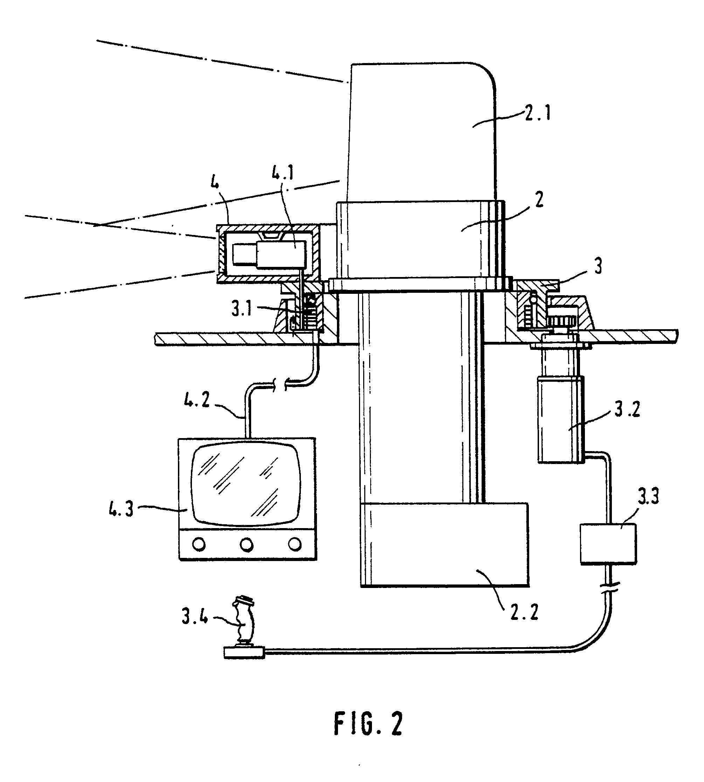

Fig. 2 in einem schematisiertem Vertikalschnitt die Vorrichtung nach Fig. 1.

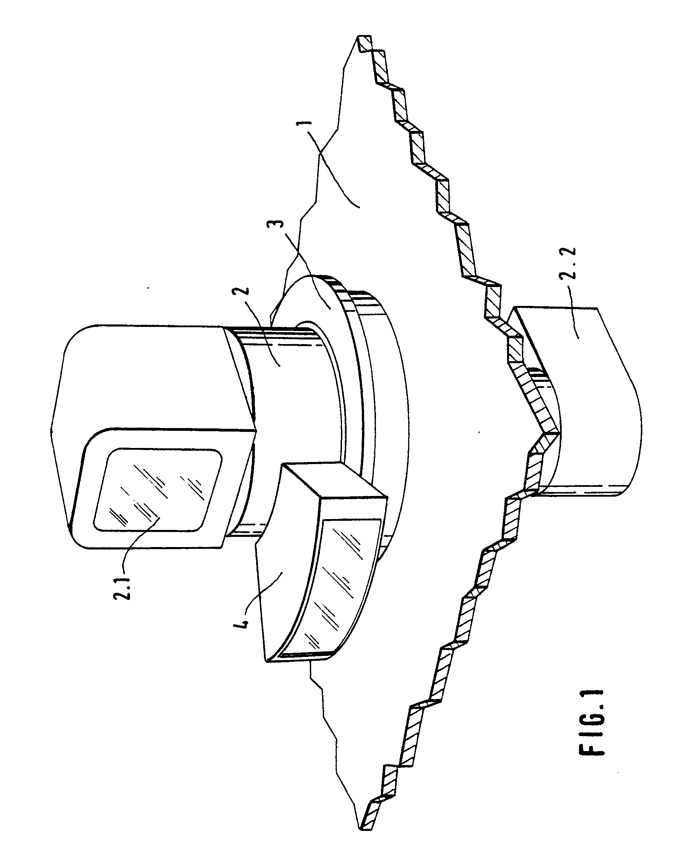

In Fig. 1 ist ein Teil einer Dachplatte 1, beispielsweise an einem Kampffahrzeug, dargestellt, durch welche ein Rundblickgerät 2 hindurchgeführt ist mit einem Ausblickteil 2.1 und einem im Inneren des Fahrzeugs angeordneten Einblickteil 2.2. Das Ausblickteil 2.1 ist um n x 360° verdrehbar.

Zur weiteren Rundumüberwachung dient ein ebenfalls um n x 360° verdrehbarer Sensor 4, welcher auf einem Trägerring 3 angeordnet ist. Das Rundblickgerät 2 ist koaxial durch den Trägerring 3 hindurchgeführt,und die Anordnung ist so, daß der Ausblickteil 2.1 des Rundblickgeräts 2 oberhalb des Sensors 4 liegt. Die Verbindung des Trägerrings 3 mit der Dachplatte 1 erfolgt vorteilhaft über ein Wälzlager 3.1 mit elektrischer Energieübertragung, wie es beispielsweise in der DE-OS 30 20 757 bzw. der europäischen Patentschrift Nr. 0 041 148 beschrieben ist.

Der Trägerring 3 wird von einem Motor 3.2 aus angetrieben, dessen Ansteuervorrichtung 3.3 z.B. von einem Steuergriff 3.4 aus betätigt wird. Die von den elektrischen Elementen 4.1 des Sensors 4 ausgehenden elektrischen Signale werden über das Wälzlager mit elektrischer Energieübertragung 3.1 und eine Leitung 4.2 einem Bildschirm 4.3 zugeführt und dort als Bild angezeigt.

**Ansprüche**

1. Vorrichtung zur Rundumüberwachung von Objekten, insbesondere Kampffahrzeugen, die ein ihre Oberseite überragendes Rundblickgerät aufweisen mittels rotierender Sensoren, gekennzeichnet durch einen Sensorträger (3), an dem mindestens ein Sensor (4) angeordnet ist und der auf einer gekrümmten, das Rundblickgerät (2) mindestens teilweise umfassenden Bewegungsbahn unabhängig vom Rundblickgerät gegenüber der Oberseite (1) des Objekts so bewegbar ist, daß das Sichtfeld des Rundblickgerätes (2) in keiner Position des Sensors (4) beeinträchtigt ist.

2. Vorrichtung nach Anspruch 1, dadurch gekennzeichnet, daß der Sensorträger als drehbarer Trägerring (3) ausgebildet ist und das Rundblickgerät (2) koaxial zum Trägerring (3) so angeordnet ist, daß sein Ausblickteil (2.1) oberhalb des Sensors (4) bzw. der Sensoren liegt.

3. Vorrichtung nach Anspruch 2, dadurch gekennzeichnet, daß der Trägerring (3) mit einer Dachplatte (1) des Objekts über ein mittenfreies Drehlager (3.1) mit elektrischer Energieübertragung verbunden ist, über welches vom Sensor (4) bzw. den Sensoren ausgehende elektrische Signale einer im Inneren des Objekts angeordneten Signalverarbeitungs-und/oder -anzeigevorrichtung (4.3) zugeführt werden.

4. Vorrichtung nach Anspruch 1, dadurch gekennzeichnet, daß der Sensorträger auf einer beliebig gekrümmten Bahn geführt ist und die vom Sensor bzw. den Sensoren ausgehenden elektrischen Signale einer im Inneren des Objekts angeordneten Signalverarbeitungs- und/oder -anzeigevorrichtung über Schleifkontakte und eine Kontaktschiene zugeführt werden.

5. Vorrichtung nach Anspruch 1, dadurch gekennzeichnet, daß der Sensorträger auf einer beliebig gekrümmten Bahn geführt ist und die vom Sensor bzw. den Sensoren ausgehenden elektrischen Signale einer im Inneren des Objekts angeordneten Signalverarbeitungs- und/oder -anzeigevorrichtung drahtlos zugeführt werden.

FIG.1

FIG. 2